# EUROPEAN PATENT SPECIFICATION

(11) **EP 4 665 644 B1**
(45) Date of publication and mention of the grant of the patent: **30.09.2026**
(21) Application number: 24713001.6
(22) Date of filing: 13.02.2024
(51) Int. Cl.: B63B 35/44, F03D 13/25, B63B 1/10

(54) **FLOATING WIND TURBINE FOUNDATION**
SCHWIMMENDES WINDTURBINENFUNDAMENT
FONDATION FLOTTANTE D'ÉOLIENNE

(30) Priority: 13.02.2023 NO 20230146
(43) Date of publication of application: 24.12.2025
(73) Proprietor: Odfjell Oceanwind AS, 5257 Kokstad (NO)
(72) Inventor: BORGEN, Eystein, 5239 Rådal (NO)
(74) Representative: Acapo Onsagers AS
(86) International application number: PCT/NO2024/050035
(87) International publication number: WO 2024/172662

(56) References cited:
- WO-A1-2022/164368
- CN-A- 111 469 994
- DE-A1- 102018 115 358
- KR-A- 20220 058 428
- US-A1- 2020 391 834

## Description

The present invention belongs to the field of wind power generation and relates to an offshore floating foundation, and more specifically to a floating wind turbine foundation.

When studying designs of floating offshore wind turbine foundations employed in various marine projects, structural efficiency in terms of weight and shape and in terms of motion characteristics clearly stands out as success criteria for most successful units.

For floating structures for offshore wind turbines, triangular shapes are often preferred due to their high degree of strength, stiffness and floating stability relative to size and, thus, also with respect to the necessary material, which is substantial for large wind turbines.

In triangular floating wind turbines platforms, each corner typically comprises one or more vertical buoyancy columns, and a wind turbine tower can typically be positioned in a center of the triangle.

In some configurations of triangular floating platforms, it has become preferred to position the wind turbine tower above one of the corners, since the wind turbine tower then more easily can be reached by a crane during assembly and/or maintenance of the wind turbine tower. A corner position has turned out not to be optimal, however, since the added weight of the wind turbine tower on one corner needs to be compensated by an additional buoyancy and corresponding or equivalent buoyancy and weight added to the two other corners in order to obtain hydrodynamic symmetry, which is important in order to avoid unwanted coupled motions of the platform due to waves acting on it. Installing a 2000-ton turbine on one corner thereby leads to a need to add 2000 tons of ballast at each of the two other corners. This significant weight on one of the corners leads to an undesirable draft, which will often exceed 15 m. A draft not exceeding 15 m would be preferable during inshore operations, since this significantly expands the number of ports available for such offshore wind installations.

In triangular configurations with the wind turbine tower positioned on a center buoy in the center between three outer ("satellite") buoys, the three outer buoys are typically connected to the center buoy with horizontal upper and lower cantilevered beams combined with a diagonal beam in the vertical plane. The upper horizontal cantilevered beams are often denoted deck beams and the lower horizontal cantilevered beams are often denoted pontoons. The design-driving load on these beams are usually wave loads coming from a direction substantially perpendicular to a line between the center of one outer buoy and the center buoy. These wave loads cause large bending moments in the upper and lower cantilevered beams which again results in large structural dimensions and a correspondingly high steel weight and high construction costs.

For floating offshore wind turbine platforms anchored with vertical tensioned mooring members (tension leg platforms), stability during towing and installation as well as lowering the platform to its final depth by tensioning the vertical mooring members is complicated and expensive due to lack of proper installation methods and installation aids.

DE102018115358A1 discloses a floating support structure for a wind turbine.

It is an object according to the present invention to minimize and possibly alleviate one or more of the disadvantages of the prior art, or to provide a useful alternative.

A further object according to the present invention is to provide a floating wind turbine foundation that is less exposed to loads from waves, wind and currents.

The present invention relates to an offshore floating wind turbine foundation comprising,
- a center buoy comprising a support structure extending outwardly from the center buoy,
- at least two outer members arranged around the center buoy, and
- a tower arranged extending upwardly from the center buoy, wherein the tower is either an integral part of the center buoy, or a separate unit which is connected to the center buoy in appropriate ways, wherein the tower is configured to attach a rotor-nacelle assembly with blades,
- a plurality of beams,

wherein the plurality of beams are arranged to form a number of pair of beams that connects the center buoy and said at least two outer members, wherein the pair of beams tapers from the center buoy towards each of said at least two outer members, characterized in that
the pair of beams comprises at least a lower pair of beams and an upper pair of beams, wherein the upper pair of beams form an upper A-frame and the lower pair of beams form a lower A-frame, wherein the support structure comprises a lower support structure and an upper support structure, wherein the lower support structure is connecting the at least lower pair of beams to the center buoy and the upper support structure is connecting the at least upper pair of beams to the center buoy, wherein the foundation further comprises diagonally arranged struts connected to the lower or upper support structure of the center buoy, or directly to the tower, between the beams, when seen from above.

The offshore floating wind turbine foundation is provided with two A-frames, an upper A-frame and a lower A-frame. According to the present invention, an outer member of the offshore floating wind turbine foundations should be understood to be a member to which said pair of beams are to be connected to.

Such an outer member may, for instance, be a buoy, a node, a combined buoy and node or the like.

Furthermore, according to one aspect, the outer member may contain ballast. The ballast may be water or any other form of liquid or solid ballast.

Similarly, the center buoy and/or beams may contain ballast, where the ballast may be water, or any other form of liquid or solid ballast.

As used in this application, a node shall be understood to be a juncture or a branching point where ends of the beams in a pair of beams terminate in/start from. Furthermore, it should be understood that such a node may be a single point or have an area extent.

At the outer members, thanks to the structural efficient pair of beams forming one or more A-frames in the offshore floating wind turbine foundation, mooring lines arranged to transfer heavy loads may be connected to the outer members in order to ensure station keeping of the offshore floating wind turbine foundation during operation.

The offshore floating wind turbine foundation may, in one embodiment, comprise at least two outer buoys arranged around a center buoy and a tower, the tower comprising a rotor-nacelle assembly with blades, wherein a plurality of beams connect the center buoy and said at least two outer buoys, the plurality of beams forming a number of pair of beams, a pair of beams tapers from the tower towards each of said at least two outer buoys.

The tower with the rotor-nacelle assembly and the blades may be connected to the center buoy in appropriate ways, or the tower may be an integrated part of the center buoy.

According to one aspect, the tower may have a diameter that is smaller than a diameter of the center buoy, whereby the tower may be assembled with the center buoy by extending a distance down the center buoy, thus forming a pipe in pipe connection.

According to one aspect, the beams in a pair of beams extending from the center buoy to each outer member may be arranged to lie in a given plane, where the given plane may be, for example, a substantially horizontal plane. However, it should be understood that the beams in each pair of beams, either individually or both, may be arranged to form an angle with this given plane.

Furthermore, it could also be envisaged that said given plane may be arranged to lie between a substantially horizontal plane and a substantially vertical plane.

According to one embodiment of the present invention, one or more support structures may be connected to the center buoy of the offshore floating wind turbine foundation.

According to one aspect, the support structure may comprise a central portion and at least three arms extending outwardly out from the central portion, where the arms may be arranged at equal intervals around a periphery of the central portion.

**In** one embodiment the arms may have a tapering form from a proximal end to a distal end.

Such a support structure may be a separate unit which is attached or connected to the center buoy in appropriate ways, for instance through welding or bolting, or may be an integral part of the center buoy.

Furthermore, if more than one support structure is used, then the support structures are arranged in such a way that the support structures are connected to the center buoy at a distance from each other. If, for instance, two support structures are to be connected to the center buoy, one support structure may be connected to the center buoy at a height substantially corresponding to a height of an upper end of an outer buoy, while another support structure may be connected to the center buoy in a vicinity of a lower part of the center buoy.

According to one aspect the number of pair of beams may be arranged in such a way that a distal end of the pair of beams may be connected to the outer buoys either in vicinity of an upper part of each of said at least two outer buoys, in vicinity of a lower part of each of said at least two outer buoys, or in vicinity of both the upper and lower part of each of said at least two outer buoys.

Each of said outer buoys may, according to the present invention, have a circular form, a square form, a rectangular form, a boat form, a parabolic form, an elliptical form or a polygonal form. Furthermore, the outer buoys may in one embodiment have the same cross-section over their entire length of height, but it could also be envisaged that the outer buoys may be designed with a varying cross-section over their length or height, where the outer buoys in such an embodiment, for example, may have a larger cross-section at a lower end and a smaller cross-section at an upper end.

Furthermore, a change of the cross-section may be gradual or continuous over the length or height of the outer buoy, or the change of cross-section may be sudden or abrupt over the length or height of the outer buoy.

According to one aspect of the present invention, the beams of each pair of beams may be arranged in such a way that a distal end of the beams may have centerlines with an imaginary point of intersection within a periphery of the outer buoys.

According to the present invention, the imaginary point of intersection between the beams in a pair of beams should be understood to be a point where the beams in the pair of beams cross each other or meet each other when the beams are imaginary extended.

In one embodiment according to the present invention, the beams of each pair of beams may be arranged in such a way that the distal end of the beams may have centerlines with an imaginary point of intersection within a circle, where the circle may have a radius less than 1/3 of a radius of a periphery of the outer buoy, and where said circle may be arranged concentrically to the outer buoy.

However, it could also be envisaged that said circle could be arranged eccentric to the outer buoy.

According to one aspect of the present invention, each pair of beams may be arranged in such a way that a proximal end of the pair of beams may be connected to a support structure of the center buoy or tower.

In one aspect the at least two outer buoys and the center buoy may be arranged at equal intervals in a triangle.

According to one aspect, the beams of a pair of beams may be arranged to communicate structurally with one or more of the adjacent pair of beams, so as to transfer loads and/or forces between the pair of beams and/or the center buoy.

According to one aspect the offshore floating wind turbine foundation may also comprise a damper arrangement, where the damper arrangement may be connected to a lower end of each outer buoy and/or the center buoy.

In one aspect of the present invention at least one strut may be arranged to extend from each of the outer buoys and to an upper end of the center buoy.

In one aspect of the present invention at least one strut may be arranged to extend from an upper end of each outer buoys and to a lower support structure of the tower.

In one aspect of the present invention at least one strut may be arranged to extend from a lower end of each outer buoys and to an upper support structure of the tower.

In one aspect of the present invention at least one strut may be arranged to extend from a lower outer member and to an upper support structure of the tower.

In yet an aspect of the present invention one strut may be arranged to extend from an upper end of each outer buoys to a lower support structure of the tower, while another strut may be arranged to extend from the lower end of each outer buoy to an upper support structure of the tower.

In one embodiment the one or more struts may be connected to a support structure of the tower, or directly to the tower, between the beams of said pair of beams when seen from above.

The one or more struts may be rigid members in form of a beam, a pipe or the like.

According to one aspect, the one or more struts may be arranged as pretensioned structural members, thereby being flexible in bending, like a wire or a rod or the like.

The offshore floating wind turbine foundation may, in one embodiment, comprise a trim/ballast system, where ballast water may be communicated between each outer buoy and two opposite beams or two opposite outer buoys, where the trim/ballast system may comprise a pressure air system.

According to the present invention the offshore floating wind turbine foundation is designed in such a way that a number of pair of beams is arranged to extend from the upper support structure of the center buoy to the vicinity of the upper part of each outer buoy, the pair of beams forming an A-frame in the offshore floating wind turbine foundation.

According to the present invention the offshore floating wind turbine foundation is designed in such a way that a number of pair of beams is arranged to extend from the lower support structure of the center buoy to the vicinity of the lower part of each outer buoy, the pair of beams forming an A-frame in the offshore floating wind turbine foundation.

According to the present invention the offshore floating wind turbine foundation is designed in such a way that a number of pair of beams is arranged to extend from the upper support structure of the center buoy to the vicinity of the upper part of each outer buoy, while a number of pair of beams is arranged to extend from the lower support structure of the center buoy to the vicinity of the lower part of each outer buoy, the number of pair of beams forming an upper and lower A-frame in the offshore floating wind turbine foundation.

According to one aspect of the present invention, the beams in a pair of beams may be arranged in such a way that an angle α in the pair of beams lies in an interval between 5 degrees and 55 degrees.

In one aspect of the present invention a proximal end of the beams of each pair of beams may be connected to a periphery of the center buoy.

In another aspect of the present invention a proximal end of the beams of each pair of beams may be connected to a support structure, the support structure further being connected to the center buoy.

According to yet an aspect of the present invention, a distance between the proximal end of the beams of each pair of beams may be less than a diameter D of the center buoy.

In another aspect of the present invention, a distance between the proximal end of the beams of each pair of beams may be equal or more than a diameter D of the center buoy.

In another aspect of the invention a number of tensioned vertical anchor members may be connected between the offshore floating wind turbine foundation, i.e. each outer node or each outer buoy and corresponding anchor(s) located on the seabed below. In this aspect of the invention a very effective tension leg platform (TLP) is disclosed where the pair of beams is contributing to the necessary buoyancy to ensure sufficient tension in the tension legs as well as stability during tow-out because each pair of beams may be piercing the water surface during towing, hence contributing to hydrostatic stability due to the increased waterplane area. In addition, the pair of beams form very strong nodes, due to the A-frame configuration, for connecting mooring lines and in particular for transferring the horizontal forces due to the wave loads.

In one aspect of the invention a vertical jacking tower may be connected to one or more of the outer members and arranged to extend above each outer node or buoy, said jacking tower also being arranged to install jacking members for tightening the vertical anchor members to a suitable pre-tension level. The jacking towers may be arranged to resist compression forces in response to the vertical downward acting forces imposed from the jacks to the jacking tower during the pre-tensioning jacking operation of the vertical mooring lines. The pre-tension of the vertical anchor members may be arranged to ensure that the outer buoys and/or pair of beams become completely submerged after the jacking operation is completed. However, it should be understood that the outer buoys and/or pair of beams also could be arranged to be partly submerged in the water.

In one aspect of the invention a top of the jacking tower remain above a waterline after the jacking operation is completed, allowing for the jacking member to operate in dry conditions. The jacking members could be any kind of jack, like hydraulic or electrically driven or any other kind of jack. The jacking members may be positioned at the upper part of the jacking tower(s). At completion of the jacking operation the vertical mooring members may be secured mechanically allowing the jacks to be removed. In one aspect of the invention the vertical jacking towers are removed from the outer buoys upon completion of the jacking operation.

In yet another aspect of the invention a mooring member is, through one of its ends connected to one of the outer buoys and through its opposite end connected to an anchor located on the seabed. In one aspect the anchor may be a single anchor with a swivel arrangement allowing the floating wind turbine foundation to rotate around the seabed anchor upon changes in the direction of the wind, current and waves. In one aspect the mooring member may comprise one or more individual mooring lines connected to the same outer node or buoy. Each of the mooring lines may be arranged to be rigid in the way that they resist at least some bending moments. In another aspect at least some of the length of the mooring lines may be arranged to be flexible in bending, substantially not transferring bending moments. In another aspect the mooring lines may be arranged to resist torsional forces. In one aspect of the invention an electrical power cable may be attached to the mooring line(s).

In yet another aspect of the invention the lower pair of beams may be arranged to be partly submerged and partly above water when floating during the assembly and/or during the offshore installation of the floating platform.

In yet another aspect of the invention at least one lower pair of beams may be arranged to be partly submerged and partly above water when floating on the water in its final installed position.

In yet another aspect of the invention at least one diagonal strut and a lower pair of beams may be arranged to be connected together at an outer node member, without the presence of an outer buoy.

In yet another embodiment of the invention the floating wind turbine foundation is arranged to rotate about a single anchor on the seabed, further the outer buoys having a horizontal cross section with a length, L, pointing towards the single anchor during operation of the wind turbine, and a width, W, perpendicular to the length L, where the length L is arranged to be larger than the width W, hence reducing the wave and current forces acting on the floating platform during operation in waves and wind driven current.

Embodiments of the present invention will now be described, by way of example only, with reference to the following figures, wherein:
Figures 1A-1B show a first embodiment of an offshore floating wind turbine foundation according to the present invention, seen in a perspective view and from above,
Figure 2 shows a second embodiment of the offshore floating wind turbine foundation according to the present invention, seen from above,
Figure 3 shows another embodiment of the offshore floating wind turbine foundation according to the present invention, seen in a perspective view,
Figures 4A-4C show another embodiment of an offshore floating wind turbine foundation according to the present invention, where the floating wind turbine is anchored to a seabed through an anchoring system, seen in a perspective view and a sideview,
Figures 5A-5B show an alternative way of anchoring the offshore floating wind turbine foundation according to figures 4A-4C, seen in a perspective view and a sideview,
Figure 6 shows yet an alternative embodiment of the offshore floating wind turbine foundation according to the present invention,
Figures 7A-7B show yet an alternative embodiment of the offshore floating wind turbine foundation according to the present invention, seen in a perspective view and a sideview,
Figures 8A-8C show yet an alternative embodiment of the offshore floating wind turbine foundation according to the present invention, seen in a perspective view, a side view and from above, and
Figures 9A-9D show a support and transport frame for support and/or transport an offshore floating wind turbine foundation according to the present invention.

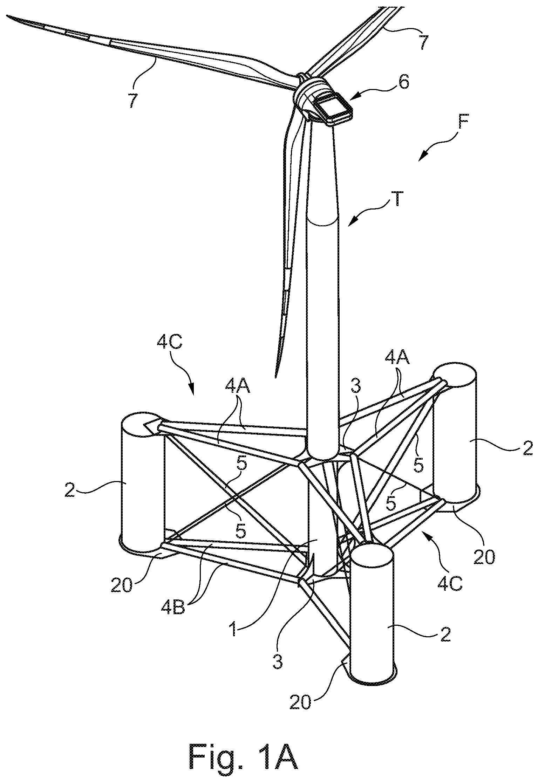

Figures 1A-1B show a first embodiment of an offshore floating wind turbine foundation F according to the present invention, where it can be seen that the offshore floating wind turbine foundation F comprises three outer members 2 and a centrally arranged buoy (center buoy) 1, where the outer members 2 are in form of buoys.

A tower T extends upwardly from the center buoy 1, where the tower T is either an integral part of the center buoy 1, or is a separate unit which is connected to the center buoy 1 in appropriate ways.

Each of the outer buoys 2 have a circular shape and is designed to have a same cross-section over its entire length or height.

However, it should be understood that the outer buoys 2 could have other forms, for instance a square form, a rectangular form, an elliptical form, shaped as a boat hull or a polygonal form. Similarly, it should be understood that the outer buoys 2 could be designed to have a varying cross-section over their length or height, where a change of the cross-section could be gradual or change abrupt.

Furthermore, the three outer buoys 2 are arranged at equal intervals in an equidistant triangle.

The outer buoys 2 and the center buoy 1 all have the same height or length, but it can be seen that the outer buoys 2 have a diameter d which is larger than a diameter D of the center buoy 1.

A rotor-nacelle assembly 6 comprising a number of blades 7 is in appropriate ways connected to a top of the tower T.

Two support structures 3 are in appropriate ways connected to the center buoy 1, where a lower support structure 3 is arranged connected to a lower end of the center buoy 1, while an upper support structure 3 is arranged connected to the center buoy 1 at a distance from the lower support structure 3.

Each support structure 3 may be a separate unit which is attached or connected to the center buoy 1 through, for instance, welding or bolting, but the support structures 3 may also be integral parts of the center buoy 1.

In the embodiment where the support structure 3 is a separate unit which is connected to the center buoy 1, the support structure 3 comprises a central portion 3A, where three "arms" 3B extend outwardly out from the central portion 3A.

In the embodiment where the support structure 3 is an integral part of the center buoy 1, the center buoy 1 will make or form the central portion 3A of the support structure, whereby the three arms 3B will extend outwardly out from the center buoy 1.

The three "arms" 3B are arranged at equal intervals around a periphery of the central portion 3A or the center buoy 1.

Furthermore, each of the three "arms" 3B will have a tapering from a proximal end of the "arms" 3B (i.e. an end which is connected to the central portion 3A of the support structure 3 or the center buoy 1) to a distal end of the "arms" 3B (i.e. an end which is to be connected to beams 4C).

The center buoy 1 and the three outer buoys 2 are connected to each other through a plurality of beams 4A, 4B, where the plurality of beams 4A, 4B are arranged to form a number of pair of beams 4C.

A pair of beams 4C is then arranged to extend between the tower 1 and a respective outer buoy 2, where the beams 4A, 4B in said pair of beams 4C are arranged to taper from the center buoy 1 and towards the outer buoy 2 to which the beams 4A, 4B of said par of beams are connected to. This will give an arrangement of the beams 4A, 4B in said pair of beams, where a distance between proximal ends of the beams 4A, 4B being connected to the center buoy 1 is larger than a distance between distal ends of the beams 4A, 4B being connected to the outer buoy 2.

Furthermore, the beams 4A, 4B of a pair of beams 4C are arranged in such a way that centerlines of the beams 4A, 4B in said pair of beams will not cross each other between the center buoy 1 and the respective outer buoys 2, but where the distal ends of the beams 4A, 4B in a pair of beams 4C are arranged to be close to each other or to abut each other when connected to respective outer buoy 2.

The beams 4A, 4B of the pair of beams 4C will then, if the beams 4A, 4C are thought of as extended, have centerlines with an imaginary point of intersection which will be located within a periphery of the outer buoy 2.

In an embodiment the imaginary point of intersection may be arranged to be within a circle 30 having a radius which is less than 1/3 of a radius of the periphery of the outer buoy 2, where the circle 30 is arranged to be concentrically to the outer buoy 2.

It is further shown that a number of struts 5 are arranged between the upper and lower pair of beams 4C, where one strut 5 is arranged to extend from an upper end of each outer buoy 2 and to a lower support structure 3 of the center buoy 1, while another strut 5 is arranged to extend from a lower end of each outer buoy 2 and to an upper support structure 3 of the center buoy 1.

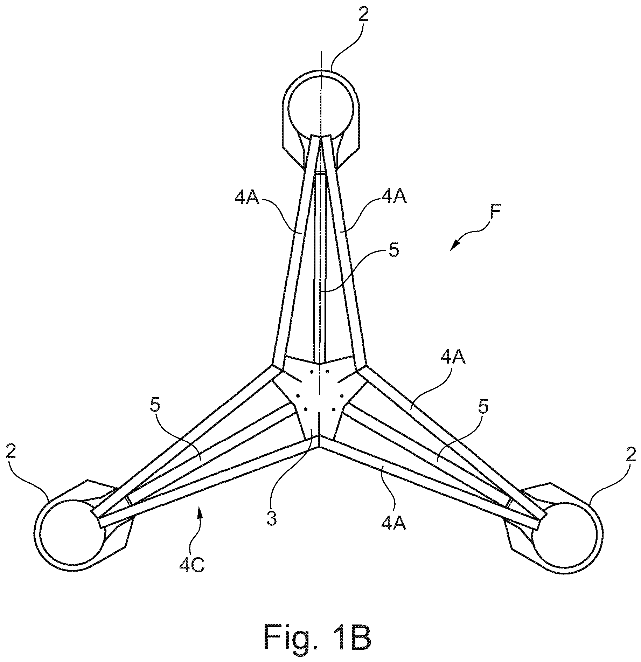

As seen from above, see also figure 1B, the struts 5 are arranged to extend between the beams 4A, 4B forming a pair of beams 4C.

The struts 5 are rigid members in form of beams, pipes or the like.

Furthermore, the struts 5 are arranged as pretensioned structural members which are flexible in bending.

In this embodiment of the offshore floating wind turbine foundation F the number of pair of beams 4C will form an upper A-frame and a lower A-frame.

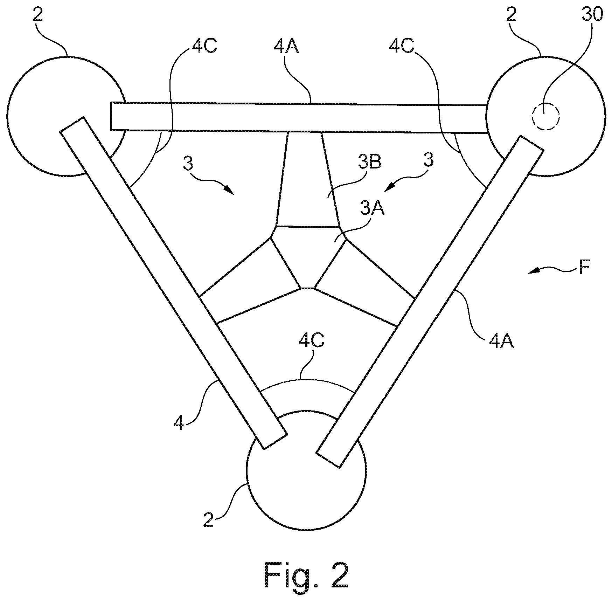

Figure 2 shown another embodiment of the offshore floating wind turbine foundation F according to the present invention seen from above, where the offshore floating wind turbine foundation F comprises three outer members 2 in form of buoys arranged around a center buoy 1, the three outer buoys 2 being arranged at equal intervals in an equidistant triangle.

The center buoy 1 is not seen from this view, but is arranged below the support structure 3 which is connected to the center buoy 1.

Furthermore, the offshore floating wind turbine foundation F comprises a tower T, but the tower T is, for the sake of simplicity not shown. However, it is to be understood that the tower T is arranged to extend upwardly from the center buoy 1 where the tower T is either an integral part of the center buoy 1, or is a separate unit which is connected to the center buoy 1 in appropriate ways.

A rotor-nacelle assembly 6 is connected to a top of the tower T.

The outer buoys 2 and the center buoy 1 have a circular shape and is designed to have a same cross-section over its entire length or height.

The outer buoys 2 and the center buoy 1 all have the same height or length, but it can be seen that the outer buoys 2 have a diameter d which is larger than a diameter D of the center buoy 1.

Furthermore, two support structures 3 (only the upper support structure is shown in figure 2) are connected to the center buoy 1, where a lower support structure 3 is connected to a lower end of the center buoy 1, while the upper support structure 3 is arranged a distance up on the center buoy 1, spaced apart from the lower support structure 3.

Each support structure 3 may be a separate unit which is attached or connected to the center buoy 1 through, for instance, welding or bolting, but the support structures 3 may also be integral parts of the center buoy 1.

In the embodiment where the support structure 3 is a separate unit which is connected to the center buoy 1, the support structure 3 comprises a central portion 3A, where three "arms" 3B extend outwardly out from the central portion 3A.

In the embodiment where the support structure 3 is an integral part of the center buoy 1, the center buoy 1 will comprise three "arms" 3B extending outwardly out from the center buoy 1.

The three arms 3B are arranged at equal intervals around a periphery of the central portion 3A or the center buoy 1.

Furthermore, each of the three arms 3B will have a tapering from a proximal end of the "arms" 3B (i.e. an end which is connected to the central portion 3A of the support structure 3 or the center buoy 1) to a distal end of the "arms" 3B (i.e. an end which is to be connected to a pair of beams 4C).

In this embodiment the center buoy 1 is, through the two support structures 3 and a plurality of beams 4A, 4B, connected to each of the three outer buoys 2, where the plurality of beams 4A, 4B are arranged to form a number of pair of beams 4C.

A pair of beams 4C is then arranged to extend between the support structure 3 being connected to the center buoy 1 and a respective outer buoy 2, where the beams 4A, 4B in a pair of beams 4C are arranged to taper from the support structure 3 and towards the outer buoy 2 the beams 4A, 4B are connected to. This will give an arrangement of the beams 4A, 4B where a distance between proximal ends of the beams 4A, 4B being connected to the support structure 3 is larger than a distance between distal ends of the beams 4A, 4B being connected to the outer buoy 2.

The arms 3B extending outwardly from the central portion 3A of the support structure 3 will in this embodiment have such a length that the beams 4A, 4B in a pair of beams 4C will form a "straight line" between two adjacent outer buoys 2.

Furthermore, the beams 4A, 4B of a pair of beams 4C are arranged in such a way that the centerlines of beams 4A, 4B will not cross each other between the support structure 3 and the respective outer buoys 2, but where the distal ends of the beams 4A, 4B in a pair of beams 4C are arranged to be close to each other or to abut each other.

The beams 4A, 4B of the pair of beams 4C will then, if the beams 4A, 4C are thought of as extended, have centerlines with an imaginary point of intersection which will be located within a periphery of the outer buoy 2.

In an embodiment the imaginary point of intersection may be arranged to be within a circle 30 having a radius which is less than 1/3 of a radius of the periphery of the outer buoy 2, where the circle 30 is arranged to be concentrically to the outer buoy 2.

Although not shown in figure 2, it is to be understood that a number of struts 5 are arranged between the upper and lower pair of beams 4C, where one strut 5 is arranged to extend from an upper end of each outer buoy 2 and to a lower support structure 3 of the center buoy 1, while another strut 5 is arranged to extend from a lower end of each outer buoy 2 and to an upper support structure 3 of the center buoy 1.

The struts 5 are rigid members in form of beams, pipes or the like.

Furthermore, the struts 5 are arranged as pretensioned structural members which are flexible in bending.

In this embodiment of the offshore floating wind turbine foundation F the number of pair of beams 4C will form an upper A-frame and a lower A-frame, although the lower A-frame is not shown in the figure.

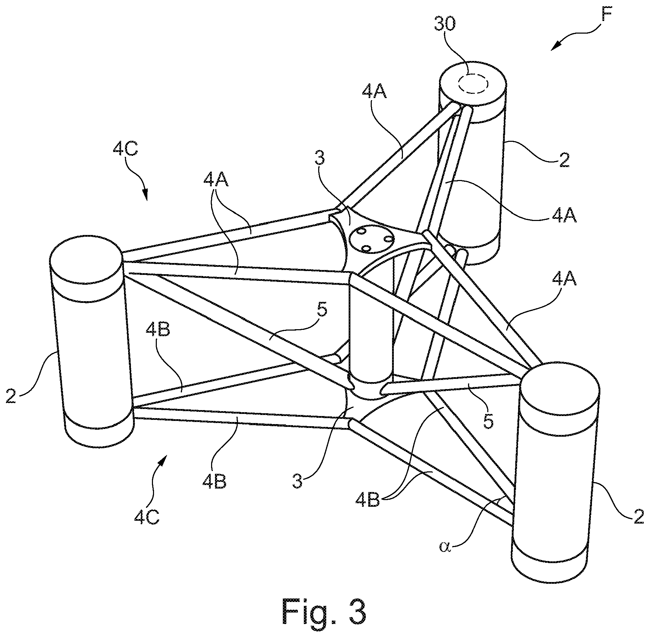

Figure 3 shows yet an embodiment of an offshore floating wind turbine foundation F according to the present invention, where the offshore floating wind turbine foundation F comprises three outer members 2 in form of buoys arranged around a center buoy 1, the three outer buoys 2 being arranged at equal intervals in an equidistant triangle.

Furthermore, the offshore floating wind turbine foundation F comprises a tower T, but the tower T is, for the sake of simplicity not shown. However, it is to be understood that the tower T is arranged to extend upwardly from the center buoy 1 where the tower T is either an integral part of the center buoy 1, or is a separate unit which is connected to the center buoy 1 in appropriate ways.

A rotor-nacelle assembly 6 is connected to a top of the tower T, see also figure 1 showing the tower T and rotor-nacelle assembly 6.

The outer buoys 2 and the center buoy 1 have a circular shape and is designed to have a same cross-section over its entire length or height.

The outer buoys 2 and the center buoy 1 all have the same height or length, but it can be seen that the outer buoys 2 have a diameter d which is larger than a diameter D of the center buoy 1.

Furthermore, two support structures 3 (only the upper support structure is shown in figure 2) are connected to the center buoy 1, where a lower support structure 3 to a lower end of the center buoy 1, while the upper support structure 3 is arranged a distance up on the center buoy 1, spaced apart from the lower support structure 3.

Each support structure 3 may be a separate unit which is attached or connected to the center buoy 1 through, for instance, welding or bolting, but the support structures 3 may also be integral parts of the center buoy 1.

In the embodiment where the support structure 3 is a separate unit which is connected to the center buoy 1, the support structure 3 comprises a central portion 3A, where three "arms" 3B extend outwardly out from the central portion 3A.

In the embodiment where the support structure 3 is an integral part of the center buoy 1, the center buoy 1 will comprise three "arms" 3B extending outwardly out from the center buoy 1.

The three "arms" 3B are arranged at equal intervals around a periphery of the central portion 3A or the center buoy 1.

Furthermore, each of the three "arms" 3B will have a tapering from a proximal end of the "arms" 3B (i.e. an end which is connected to the central portion 3A of the support structure 3 or the center buoy 1) to a distal end of the "arms" 3B (i.e. an end which is to be connected to a pair of beams 4C).

In this embodiment the center buoy 1 is, through the support structure 3 and a plurality of beams 4A, 4B, connected to each of the three outer buoys 2, where the plurality of beams 4A, 4B are arranged to form a number of pair of beams 4C.

A pair of beams 4C is then arranged to extend between the support structure 3 being connected to the center buoy 1 and a respective outer buoy 2, where the beams 4A, 4B in a pair of beams 4C are arranged to taper from the support structure 3 and towards the outer buoy 2 the beams 4A, 4B are connected to. This will give an arrangement of the beams 4A, 4B where a distance between proximal ends of the beams 4A, 4B being connected to the support structure 3 is larger than a distance between distal ends of the beams 4A, 4B being connected to the outer buoy 2.

The arms 3B extending outwardly from the central portion 3A of the support structure 3 will in this embodiment have such a length that the beams 4A, 4B in a pair of beams 4C will form an "angled line" between two adjacent outer buoys 2.

Furthermore, the beams 4A, 4B of a pair of beams 4C are arranged in such a way that the centerlines of beams 4A, 4B will not cross each other between the support structure 3 and the respective outer buoys 2, but where the distal ends of the beams 4A, 4B in a pair of beams 4C are arranged to be close to each other or to abut each other.

The beams 4A, 4B of the pair of beams 4C will then, if the beams 4A, 4C are thought of as extended, have an imaginary point of intersection which will be located within a periphery of the outer buoy 2.

In an embodiment the imaginary point of intersection may be arranged to be within a circle 30 having a radius which is less than 1/3 of a radius of the periphery of the outer buoy 2, where the circle 30 is arranged to be concentrically to the outer buoy 2.

Furthermore, a number of struts 5 are arranged between the upper and lower pair of beams 4C, where one strut 5 is arranged to extend from an upper end of each outer buoy 2 and to a lower support structure 3 of the center buoy 1, while another strut 5 is arranged to extend from a lower end of each outer buoy 2 and to an upper support structure 3 of the center buoy 1.

The struts 5 are rigid members in form of beams, pipes or the like.

Furthermore, the struts 5 are arranged as pretensioned structural members which are flexible in bending.

The beams 4A, 4B in a pair of beams 4C may be arranged in such a way that an angle α in the pair of beams 4C lies in an interval between 5 degrees and 55 degrees.

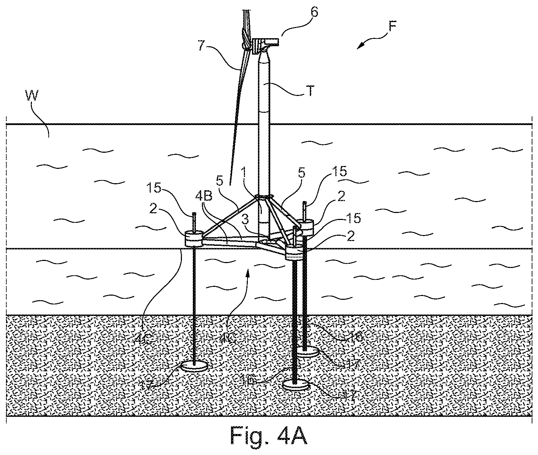

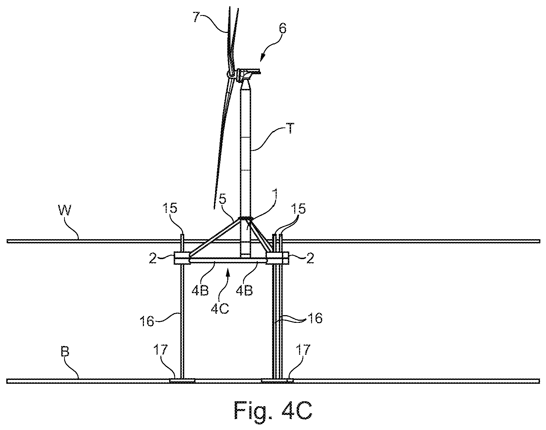

Figures 4A-4C show yet an embodiment of an offshore floating wind turbine foundation according to the present invention, where the offshore wind turbine foundation F comprises three outer members 2 in form of buoys arranged around a center buoy 1 and where the three outer buoys 2 are arranged at equal intervals in an equidistant triangle.

As seen, a tower T is arranged to extend upwardly from the center buoy 1, where the tower T is either an integral part of the center buoy 1, or is a separate unit which is connected to the center buoy 1 in appropriate ways.

A rotor-nacelle assembly 6 with a number of blades 7 is connected to a top of the tower.

In this embodiment both the three outer buoys 2 and the center buoy 1 will have a circular shape, but the outer buoys 2 will have a diameter d that is larger than a diameter D of the center buoy 1. Furthermore, the center buoy 1 will have a height or length that is larger than the height or length of the three outer buoys 2.

The outer buoys 2 may contain ballast. The ballast may be water or any other form of liquid or solid ballast.

The center buoy 1 may contain ballast. The ballast may be water or any other form of liquid or solid ballast.

The beams (4A, 4B) may contain ballast. The ballast may be water or any other form of liquid or solid ballast.

A support structure 3 is connected to a lower end of the center buoy 1, where the support structure 3, for instance, is connected to the center buoy 1 through welding or bolting. However, it should be understood that the support structure 3 may also be an integral part of the center buoy 1.

The support structure 3 comprises a central portion 3A and three arms 3B extend outwards from the central portion 3A of the support structure 3, where the three arms 3B are arranged at equal intervals around a periphery of the central portion 3A of the support structure 3 or the center buoy 1.

Furthermore, each of the three "arms" 3B will have a tapering from a proximal end of the arms 3B (i.e. an end which is connected to the central portion 3A of the support structure 3 or the center buoy 1) to a distal end of the arms 3B (i.e. an end which is to be connected to beams 4C).

In this embodiment the center buoy 1 is, through the support structure 3 and a plurality of beams 4B, connected to each of the three outer buoys 2, where the plurality of beams 4B are arranged to form a number of pair of beams 4C.

A pair of beams 4C is then arranged to extend between the support structure 3 being connected to the center buoy 1 and a respective outer buoy 2, where the beams 4B in a pair of beams 4C are arranged to taper from the support structure 3 and towards the outer buoy 2 the beams 4B are connected to. This will give an arrangement of the beams 4B where a distance between proximal ends of the beams 4B being connected to the support structure 3 is larger than a distance between distal ends of the beams 4B being connected to the outer buoy 2.

The arms 3B extending outwardly from the central portion 3A of the support structure 3 will in this embodiment have such a length that the beams 4B in a pair of beams 4C will form an "angled line" between two adjacent outer buoys 2.

Furthermore, the beams 4B of a pair of beams 4C are arranged in such a way that the centerlines of beams 4B will not cross each other between the support structure 3 and the respective outer buoys 2, but where the distal ends of the beams 4B in a pair of beams 4C are arranged to be close to each other or to abut each other.

The centerlines of beams 4B of the pair of beams 4C will then, if the beams 4C are thought of as extended, have an imaginary point of intersection which will be located within a periphery of the outer buoy 2.

In an embodiment the imaginary point of intersection may be arranged to be within a circle having a radius which is less than 1/3 of a radius of the periphery of the outer buoy 2, where the circle is arranged to be concentrically to the outer buoy 2.

Furthermore, a number of struts 5 are arranged between the pair of beams 4C, where one strut 5 is arranged to extend from each outer member 2 and to an upper end of the center buoy 1.

The struts 5 are rigid members in form of beams, pipes or the like.

Furthermore, the struts 5 are arranged as pretensioned structural members which are flexible in bending.

The offshore floating wind turbine foundation F comprises also an anchoring system, where the anchoring system includes a (vertical) jacking tower 15 arranged on each of the outer buoys 2 and plurality of vertical anchor members 16. Each jacking tower 15 comprises jacking members (not shown) that are used to tighten the plurality of vertical anchor members 16 to a suitable pre-tension level.

The plurality of vertical anchor members 16 are connected to a corresponding anchor 17 arranged below each outer buoy 2.

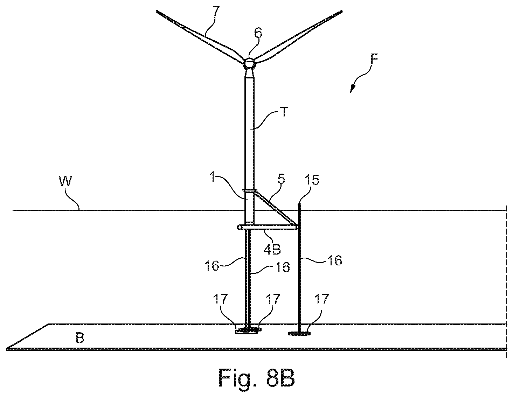

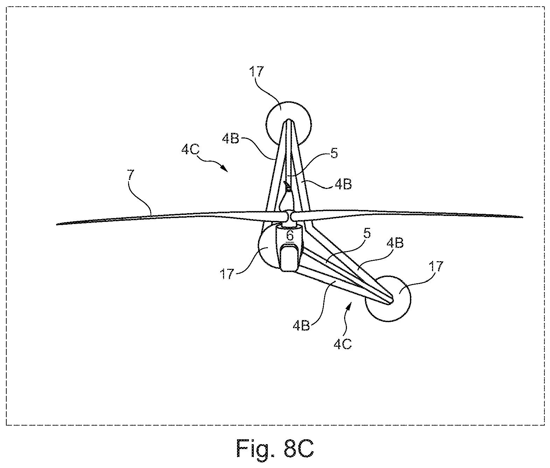

Furthermore, the jacking towers 15 are arranged to project a certain height above the outer buoys 2, the height being such that a part of the jacking tower 15 will protrude above a surface of the water when the offshore floating wind turbine foundation F is submerged and anchored in its operation position, see also figure 8B.

The anchoring system in this embodiment is a TLP system (Tension Leg Platform system).

Furthermore, figure 4A shows the offshore floating wind turbine foundation F when it has been transported to an installation site and where the jacking towers 15 are in the process of tightening the vertical anchor members 16 to submerge the floating wind turbine foundation F to its operating position, as seen in figure 8B. The floating wind turbine foundation F will then be transported to its installation site in a position where the beams 4 lie in a surface of the water and where the beams 4, together with the outer buoys 2, provide the necessary buoyancy and hydrostatic stability for the floating wind turbine foundation F.

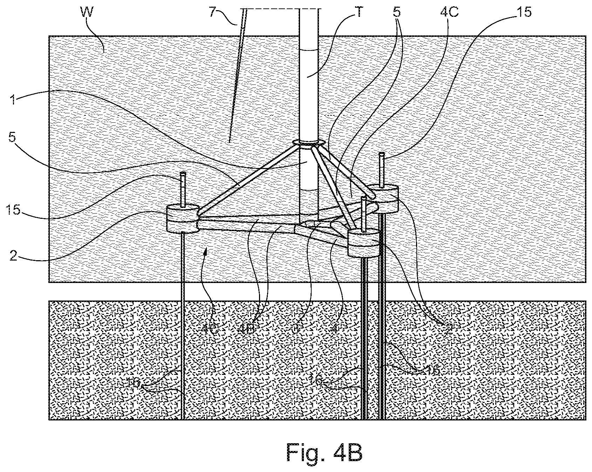

Figures 4B-4C show the floating wind turbine foundation F in its operating position, where the outer buoys 2 are completely submerged, and where only a part of the jacking towers 15 extend above the surface of water, the floating wind turbine foundation F being anchored to the seabed through the plurality of vertical anchor members 16.

A method for anchoring of the offshore floating wind turbine foundation F comprises the following steps:
- transport the offshore floating wind turbine foundation F to an installation site,
- connect a plurality of anchor members 16 to respective anchors 17 arranged below each outer buoy 2,
- connect a buoyant member (not shown) provided with line to each anchor member 16,
- pull up the buoyant member with line and pass the line through the jacking tower 15,
- repeat previous step for each jacking tower 15,
- pull the line until the anchor member 15 is/are brought into engagement with the jacking members (not shown) of each jacking tower 15,
- use the jacking members (not shown) of the jacking tower 15 simultaneously to tighten the vertical anchor members 16 in order to submerge the floating wind turbine foundation F to its operating position.

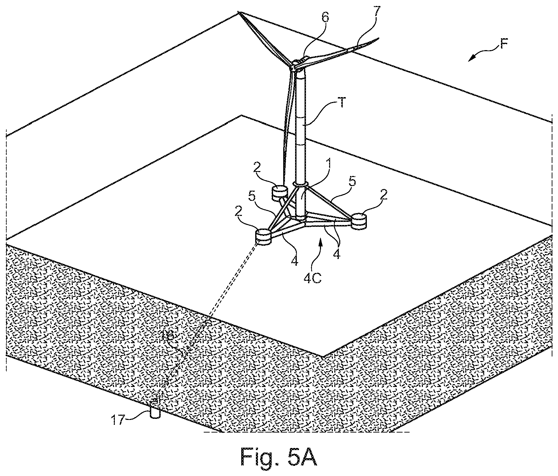

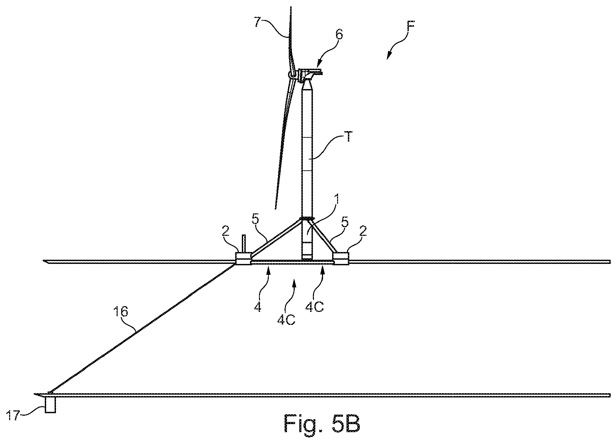

Figures 5A-5B show another anchoring system for the offshore floating wind turbine foundation F according to figures 4A-4C, where the anchoring system in this embodiment is a single point anchoring system and comprises a mooring member 16. The mooring member 16 is, through one of its ends connected to an outer buoy 2 and through its opposite end connected to an anchor 17 arranged on the seabed.

The anchor 17 comprises a swivel arrangement (not shown), this allowing the offshore floating wind turbine foundation F to rotate around the anchor 17 upon changes in the direction of the wind, current and/or waves.

The mooring member 16 comprises one or more mooring lines, where each mooring line, in order to avoid entanglement of one or more electrical power cables (not shown) may be arranged to be rigid in the way that it at least resist some bending moments.

As the offshore floating wind turbine foundation F in this embodiment is the same offshore floating wind turbine foundation F as described according to figures 4A-4C, the offshore floating wind turbine foundation F is not described any further.

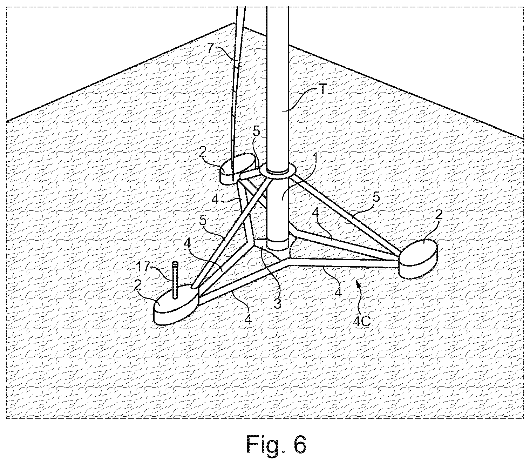

Figure 6 shows an alternative embodiment of the offshore floating wind turbine foundation F according to figures 5A-5B, where the offshore floating wind turbine foundation F in this embodiment comprises three outer members 2 in form of buoys, but where the buoys 2 have an elliptic form or a "boat" like form. The rest of the offshore floating wind turbine foundation F will be as described according to figures 5A-5B.

Furthermore, the offshore floating wind turbine foundation F comprises also an anchoring system, where the anchoring system includes a (vertical) jacking tower 15 arranged on one of the outer buoys 2 and one or more vertical anchor members 16 (not shown). The jacking tower 15 comprises jacking members (not shown) that are used to tighten the one or more vertical anchor members 16 to a suitable pre-tension level.

The one or more vertical anchor members 16 are connected to a corresponding anchor 17 arranged below the outer buoy 2.

The jacking tower 15 is arranged to project a certain height above the outer buoys 2, the height being such that a part of the jacking tower 15 will protrude above a surface of the water when the offshore floating wind turbine foundation F is submerged and anchored in its operation position, see also figure 4B.

The anchoring system in this embodiment is a TLP system (Tension Leg Platform system).

The method for anchoring the offshore floating wind turbine foundation F as described in relation to figures 4A-4C may then be used when anchoring the offshore floating wind turbine foundation F.

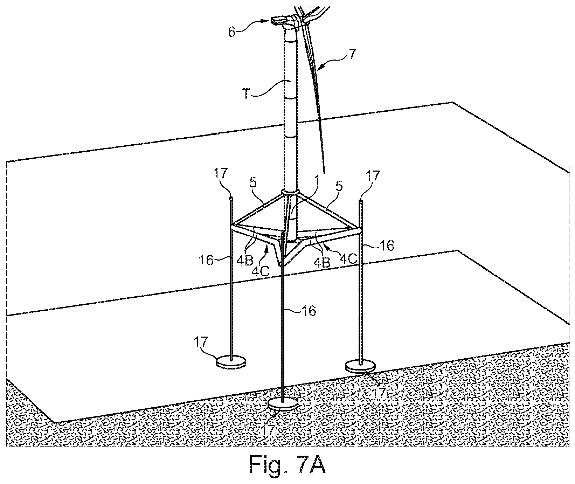

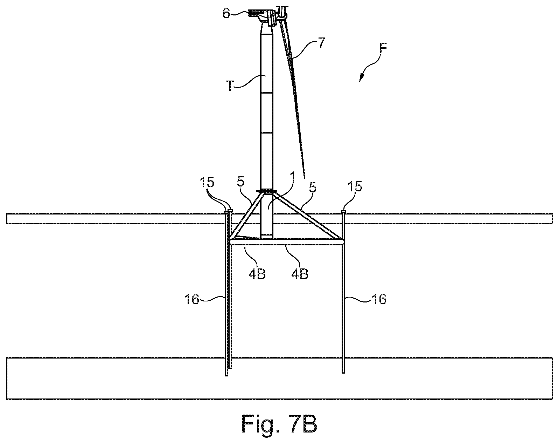

Figures 7A-7B show yet an embodiment of an offshore floating wind turbine foundation F according to the present invention, where the offshore wind turbine foundation F comprises three outer members 2 in form of nodes arranged around a center buoy 1 and where the three outer nodes 2 are arranged at equal intervals in an equidistant triangle.

A tower T extends upwardly from the center buoy 1, where the tower T is either an integral part of the center buoy 1, or is a separate unit which is connected to the center buoy 1 in appropriate ways.

A rotor-nacelle assembly 6 with a number of blades 7 is connected to a top of the tower.

The center buoy 1 has a circular shape, but it should be understood that the center buoy 1 also may have other form, for instance a polygonal form, an elliptic form or the like.

A support structure 3 is connected to a lower end of the center buoy 1, where the support structure 3, for instance, is connected to the center buoy 1 through welding or bolting. However, it should be understood that the support structure 3 may also be an integral part of the center buoy 1.

The support structure 3 comprises a central portion 3A and three arms 3B extend outwards from the central portion 3A of the support structure 3, where the three arms 3B are arranged at equal intervals around a periphery of the central portion 3A of the support structure 3 or the center buoy 1.

Furthermore, each of the three "arms" 3B will have a tapering from a proximal end of the arms 3B (i.e. an end which is connected to the central portion 3A of the support structure 3 or the center buoy 1) to a distal end of the arms 3B (i.e. an end which is to be connected to beams 4C).

In this embodiment the center buoy 1 is, through the support structure 3 and a plurality of beams 4B, connected to each of the three outer nodes 2, where the plurality of beams 4B are arranged to form a number of pair of beams 4C.

A pair of beams 4C is then arranged to extend between the support structure 3 being connected to the center buoy 1 and a respective outer node 2, where the beams 4B in a pair of beams 4C are arranged to taper from the support structure 3 and towards the outer node 2 the beams 4B are connected to. This will give an arrangement of the beams 4B where a distance between proximal ends of the beams 4B being connected to the support structure 3 is larger than a distance between distal ends of the beams 4B being connected to the outer node 2.

The arms 3B extending outwardly from the central portion 3A of the support structure 3 will in this embodiment have such a length that the beams 4B in a pair of beams 4C will form an "angled line" between two adjacent outer nodes 2.

Furthermore, the beams 4B of a pair of beams 4C are arranged in such a way that the centerlines of beams 4B will not cross each other between the support structure 3 and the respective outer node 2, but where the distal ends of the beams 4B in a pair of beams 4C are arranged to be close to each other or to abut each other.

The centerlines of beams 4B of the pair of beams 4C will then, if the beams 4B are thought of as extended, have an imaginary point of intersection which will be located within a periphery of the outer node 2.

In an embodiment the imaginary point of intersection may be arranged to be within a circle 30 having a radius which is less than 1/3 of a radius of the periphery of the outer node 2, where the circle 30 is arranged to be concentrically to the outer node 2.

Furthermore, a number of struts 5 are arranged between the center buoy 1 and the pair of beams 4C, where one strut 5 is arranged to extend from the outer node 2 and to an upper end of the center buoy 1.

The struts 5 are rigid members in form of beams, pipes or the like.

Furthermore, the struts 5 are arranged as pretensioned structural members which are flexible in bending.

The offshore floating wind turbine foundation F comprises also an anchoring system, where the anchoring system includes a (vertical) jacking tower 15 connected to each of the outer nodes 2 and a plurality of vertical anchor members 16. Each jacking tower 15 comprises jacking members (not shown) that are used to tighten the plurality of vertical anchor members 16 to a suitable pre-tension level.

The plurality of vertical anchor members 16 is/are connected to a corresponding anchor 17 arranged below each outer node 2.

Furthermore, the jacking towers 15 are arranged to project a certain height above the outer nodes 2, the height being such that a part of the jacking tower 15 will protrude above a surface of the water when the offshore floating wind turbine foundation F is submerged and anchored in its operation position.

The anchoring system in this embodiment is a TLP system (Tension Leg Platform system).

The method for anchoring the offshore floating wind turbine foundation F as described in relation to figures 4A-4C may then be used when anchoring the offshore floating wind turbine foundation F.

Furthermore, in a similar way as described in the embodiment according to figure 4A, the offshore floating wind turbine foundation F may be transported out to its installation location in a position where the pair of beams are in a surface position

When the offshore floating wind turbine foundation F is in its installation location, the jacking towers 15 will be used simultaneously to tighten all the vertical anchor members 16 in order to submerge the floating wind turbine foundation F to its operating position, as seen in figures 7A-7B.

Figures 7A-7B show the floating wind turbine foundation F in its operating position, where the outer nodes 2 are completely submerged, and where only a part of the jacking towers 15 extend above the surface of water, the floating wind turbine foundation F being anchored to the seabed through the plurality of vertical anchor members 16.

According to the invention, there must be an upper pair of beams forming an A-frame and a lower pair of beams forming an A-frame. There must also be an upper support structure connecting the upper pair of beams to the center buoy (1) and a lower support structure connecting the lower pair of beams to the center buoy (1).

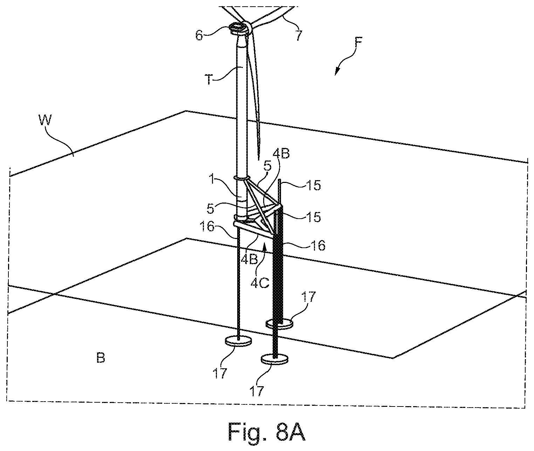

Figures 8A-8C show yet an alternative embodiment of the offshore floating wind turbine foundation F according to the present invention, where the offshore floating wind turbine foundation F is shown in a perspective view, a side view and from above.

The offshore floating wind turbine foundation F comprises two (outer) members 2 in form of nodes and a center buoy 1 arranged at equal intervals in an equidistant triangle.

A tower T will extend upwardly from the center buoy 1, where the tower T is either an integral part of the center buoy 1, or is a separate unit which is connected to the center buoy 1 in appropriate ways.

A rotor-nacelle assembly 6 with a number of blades 7 is connected to a top of the tower.

The center buoy 1 has a circular shape, but it should be understood that the center buoy 1 also may have other form, for instance a polygonal form, an elliptic form, a "boat like" form or the like.

A support structure 3 is connected to a lower end of the center buoy 1, where the support structure 3, for instance, is connected to the center buoy 1 through welding or bolting. However, it should be understood that the support structure 3 may also be an integral part of the center buoy 1.

The support structure 3 comprises a central portion 3A and three arms 3B extend outwards from the central portion 3A of the support structure 3, where the three arms 3B are arranged spaced apart around a periphery of the central portion 3A of the support structure 3 or the center buoy 1.

Furthermore, each of the three arms 3B will have a tapering form from a proximal end of the arms 3B (i.e. an end which is connected to the central portion 3A of the support structure 3 or the center buoy 1) and to a distal end of the arms 3B (i.e. an end which is to be connected to beams 4C).

In this embodiment the center buoy 1 is, through the support structure 3 and a plurality of beams 4B, forming a pair of beams 4C, connected to each of the two outer nodes 2, where the plurality of beams 4B are arranged to form a number of pair of beams 4C.

A pair of beams 4C is then arranged to extend between the support structure 3, the support structure 3 being connected to the center buoy 1, and a respective outer node 2, where the beams 4B in a pair of beams 4C are arranged to taper from the support structure 3 and towards the outer node 2 the beams 4B are connected to. This will give an arrangement of the beams 4B where a distance between proximal ends of the beams 4B being connected to the support structure 3 is larger than a distance between distal ends of the beams 4B being connected to the outer node 2.

The arms 3B extending outwardly from the central portion 3A of the support structure 3 will in this embodiment have such a length that the beams 4B in a pair of beams 4C will form an "angled line" between two adjacent outer nodes 2.

Furthermore, the beams 4B of a pair of beams 4C are arranged in such a way that the centerlines of beams 4B will not cross each other between the support structure 3 and the respective outer node 2, but where the distal ends of the beams 4B in a pair of beams 4C are arranged to be close to each other or to abut each other.

The centerlines of beams 4B of the pair of beams 4C will then, if the beams 4B are thought of as extended, have an imaginary point of intersection which will be located within a periphery of the outer node 2.

In an embodiment the imaginary point of intersection may be arranged to be within a circle having a radius which is less than 1/3 of a radius of the periphery of the outer node 2, where the circle is arranged to be concentrically to the outer node 2.

Furthermore, a number of struts 5 are arranged between the center buoy 1 and the pair of beams 4C, where one strut 5 is arranged to extend from the outer node 2 and to an upper end of the center buoy 1.

The struts 5 are rigid members in form of beams, pipes or the like.

Furthermore, the struts 5 are arranged as pretensioned structural members which are flexible in bending.

The offshore floating wind turbine foundation F comprises also an anchoring system, where the anchoring system includes a (vertical) jacking tower 15 connected to each of the outer nodes 2 and a plurality of vertical anchor members 16. Each jacking tower 15 comprises jacking members (not shown) that are used to tighten the plurality of vertical anchor members 16 to a suitable pre-tension level.

The plurality of vertical anchor members 16 is/are connected to a corresponding anchor 17 arranged below each outer node 2.

Furthermore, the jacking towers 15 are arranged to project a certain height above the outer nodes 2, the height being such that a part of the jacking tower 15 will protrude above a surface of the water when the offshore floating wind turbine foundation F is submerged and anchored in its operation position.

The anchoring system in this embodiment is a TLP system (Tension Leg Platform system).

The method for anchoring the offshore floating wind turbine foundation F as described in relation to figures 4A-4C may then be used when anchoring the offshore floating wind turbine foundation F.

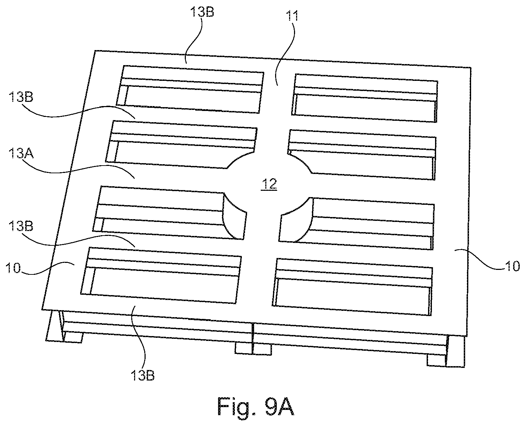

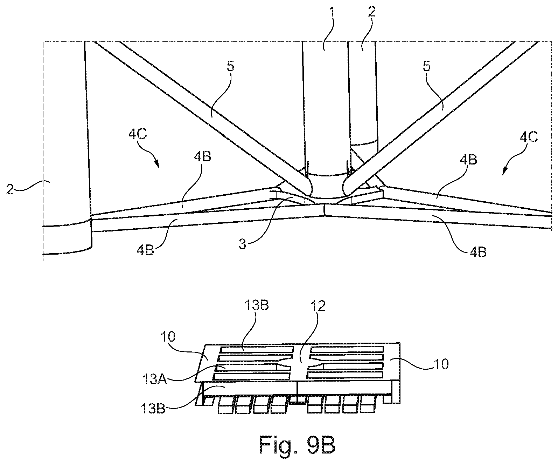

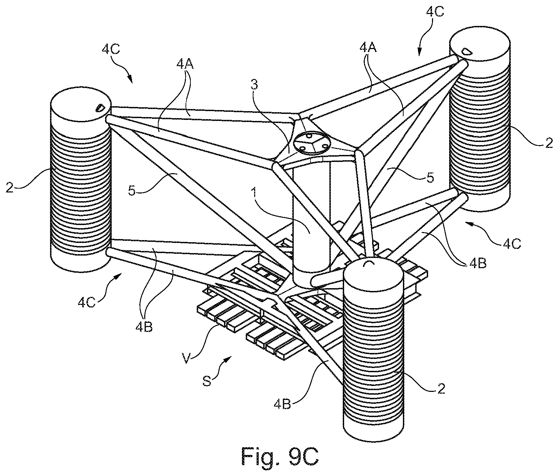

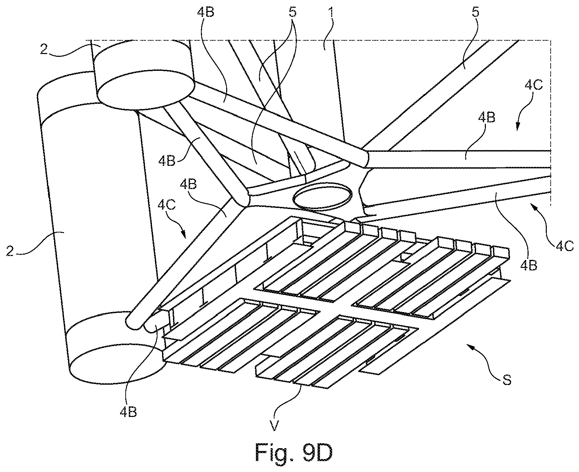

Figures 9A-9D show a support and transport frame S for the offshore floating wind turbine foundation F according to the present invention, where the support and transport frame S may be used to support the offshore wind turbine foundation F, for instance, during manufacturing or storage of the offshore wind turbine foundation F, or during transport of the offshore wind turbine foundation F, for instance, from a quay area and to a vessel which is to transport the offshore wind turbine foundation from a fabrication yard to an area closer to the final installation area, or to a submersible barge or vessel as part of a float-off operation.

A number of self-propelled multiwheel trailers (SPMT) V may be used during the transport of the offshore wind turbine foundation F.

The support and transport frame S is built around a central vertically arranged pipe 12 with substantially the same diameter as the center buoy 1. A flange connection may be arranged between the pipe 12 and the center buoy 1 for transferring the weight from the wind turbine foundation (F) to the support and transport frame S. Heavy box beams 11, 13A are welded to the central vertically arranged pipe 12. Heavy outer beams 10 are welded to the heavy box beams 11, 13A. Secondary beams 13B with a lower height is welded between the heavy box beams 11,13A and the heavy outer beams 10. Due to the lower height of the secondary beams enough vertical space is arranged allowing self-propelled multiwheel trailers (SPMT) to be positioned under the secondary beams 13B, thus allowing the load transfer between the support and transport frame to the SPMTs.

The support and transport frame S is arranged to support and transport the offshore floating wind turbine foundation F in the transport phase on a vessel, and/or load-out phase to a vessel or a submersible vessel or barge.

Furthermore, the outer profile element 10 and the inner profile element 11A are connected to each other through a plurality of transverse extending beam elements 13.

The transverse extending beams elements 13B have a lower height than the outer and inner profile elements 10, 11, 13A, thereby providing a space between a ground and an upper surface of the support and transport frame S, such that a number of self-propelled multiwheel trailers V may be used to lift and transport the support and transport frame S.

## Claims

1. An offshore floating wind turbine foundation (F) comprising,
- a center buoy (1) comprising a support structure (3) extending outwardly from the center buoy (1),
- at least two outer members (2) arranged around the center buoy (1), and
- a tower (T) arranged extending upwardly from the center buoy (1), wherein the tower (T) is either an integral part of the center buoy (1), or a separate unit which is connected to the center buoy (1) in appropriate ways, wherein the tower (T) is configured to attach a rotor-nacelle assembly (6) with blades,
- a plurality of beams (4A, 4B),
wherein the plurality of beams (4A, 4B) are arranged to form a number of pair of beams (4C) that connects the center buoy (1) and said at least two outer members (2), wherein the pair of beams (4C) tapers from the center buoy (1) towards each of said at least two outer members (2),
**characterized in that**
the pair of beams (4C) comprises at least a lower pair of beams and an upper pair of beams, wherein the upper pair of beams form an upper A-frame and the lower pair of beams form a lower A-frame, wherein the support structure (3) comprises a lower support structure and an upper support structure, wherein the lower support structure is connecting the at least lower pair of beams to the center buoy (1) and the upper support structure is connecting the at least upper pair of beams to the center buoy (1), wherein the foundation (F) further comprises diagonally arranged struts (5) connected to the lower or upper support structure of the center buoy (1), or directly to the tower (T), between the beams (4A, 4B), when seen from above.

2. The offshore floating wind turbine foundation (F) according to any of the preceding claims, wherein an outer member (2) is a buoy, a node or a combined buoy and node.

3. The offshore floating wind turbine foundation (F) according to any of the preceding claims, wherein the number of pair of beams (4C) are arranged connected either in vicinity of an upper part of each of said outer members (2), in vicinity of a lower part of each of said outer members (2), or in vicinity of the upper and lower part of each of said outer members (2).

4. The offshore floating wind turbine foundation (F) according to any of the preceding claims, wherein a distal end of the beams (4A, 4B) of each pair of beams (4C) have centerlines with an imaginary point of intersection within a periphery of each outer buoy (2).

5. The offshore floating wind turbine foundation (F) according to any of the preceding claims, wherein the distal end of the pair of beams (4C) have centerlines with an imaginary point of intersection within a circle (30) with a radius less than 1/3 of a radius (R) of periphery of the outer buoy (2), said circle (30) being arranged concentrically to the outer buoy (2).

6. The offshore floating wind turbine foundation (F) according to any of the preceding claims, wherein the struts are arranged as pretensioned structural members which are flexible in bending, like a wire or a rod or the like.

7. The offshore floating wind turbine foundation (F) according to any of the preceding claims, wherein the offshore floating wind turbine foundation (F) further comprises a trim/ballast system, wherein ballast water is communicated between each outer buoy (2) and two opposite beams (4) or opposite outer buoy (2).

8. The offshore floating wind turbine foundation (F) according to any of the preceding claims, wherein an angle α between the beams in a pair of beams is arranged to be in an interval between 5 degrees and 55 degrees.

9. The offshore floating wind turbine foundation (F) according to any of the preceding claims, wherein a proximal end of the beams (4A, 4B) of each pair of beams (4C) is connected to a periphery of the center buoy (1).

10. The offshore floating wind turbine foundation (F) according to claim 9, wherein a distance between the proximal end of the beams (4A, 4B) of each pair of beams (4C) is less than a diameter (D) of the center buoy (1).

11. The offshore floating wind turbine foundation (F) according to claim 9, wherein a distance between the proximal end of the beams (4A, 4B) of each pair of beams (4C) is more than a diameter (D) of the center buoy (1).

12. The offshore floating wind turbine foundation (F) according to any of the preceding claims, wherein at least one strut (5) is arranged to extend from at least one outer member (2) to an upper support structure (3) of center buoy (1) or directly to the tower (T).

13. The offshore floating wind turbine foundation (F) according to any of the preceding claims, wherein the offshore floating wind turbine foundation (F) furthermore comprises an anchoring system.

14. The offshore floating wind turbine foundation (F) according to claim 13, wherein the anchoring system comprises a single anchor on the seafloor.

15. The offshore floating wind turbine foundation (F) according to claim 13, wherein the anchoring system comprises a number of tensioned vertical anchor members connected between the offshore floating wind turbine foundation and anchor(s) located on the seabed.

16. The offshore floating wind turbine foundation (F) according to claim 13, wherein anchoring system comprises one or more jacking towers (15), a plurality of anchor members (16) and anchors (17).

17. The offshore floating wind turbine foundation (F) according to claim 13, wherein anchoring system comprises one or more mooring members (16) and an anchor (17) the anchor (17) comprising a swivel arrangement.

18. The offshore floating wind turbine foundation (F) according to any of the preceding claims, wherein a support and transport frame (S) is built around a central vertically arranged pipe (12) with substantially the same diameter as said center buoy (1), the support and transport frame (S) arranged to support and transport the offshore floating wind turbine foundation (F) in the transport phase on a vessel. and/or load-out phase to a vessel or a submersible vessel or barge.

19. The offshore floating wind turbine foundation (F) according to any of the preceding claims, wherein the outer member (2) is arranged to be partly above the surface of the water during towing and installation, and submerged below the surface of the water upon completion of the installation.

20. The offshore floating wind turbine foundation (F) according to claim 16, wherein the jacking towers (15) are arranged to project a certain height above the outer members (2), the height being such that a part of the jacking tower (15) will protrude above a surface of the water when the offshore floating wind turbine foundation (F) is submerged and anchored in its operation position.

21. A method for anchoring of an offshore floating wind turbine foundation (F) according to any of claim 1-20, wherein the method comprising the following steps:
- transport the offshore floating wind turbine foundation (F) to an installation site,
- connecting a plurality of anchor members (16) to respective anchors (17) arranged below each outer member (2),
- bringing said anchor members (15) into engagement with the jacking members (not shown) of each jacking tower (15),
- use the jacking members (not shown) of the jacking tower (15) to tighten the vertical anchor members (16) in order to submerge the floating wind turbine foundation (F) to its operating position.

## Patentansprüche

1. Schwimmendes Offshore-Windturbinenfundament (F), umfassend
- eine Mittelboje (1), umfassend eine Stützstruktur (3), die sich von der Mittelboje (1) nach außen erstreckt,
- zumindest zwei äußere Elemente (2), die um die Mittelboje (1) angeordnet sind, und
- einen Turm (T), der so angeordnet ist, dass er sich von der Mittelboje (1) nach oben erstreckt, wobei der Turm (T) entweder ein integraler Teil der Mittelboje (1) oder eine separate Einheit ist, die mit der Mittelboje (1) auf angemessene Weisen verbunden ist, wobei der Turm (T) dazu konfiguriert ist, eine Rotorgondelbaugruppe (6) mit Schaufeln anzubringen,
- eine Vielzahl von Trägern (4A, 4B),
wobei die Vielzahl von Trägern (4A, 4B) dazu angeordnet ist, eine Anzahl an Paaren von Trägern (4C) zu bilden, welche die Mittelboje (1) und die zumindest zwei äußeren Elemente (2) verbindet, wobei sich das Paar von Trägern (4C) von der Mittelboje (1) zu jedem von den zumindest zwei äußeren Elementen (2) verjüngt,
**dadurch gekennzeichnet, dass**
das Paar von Trägern (4C) zumindest ein unteres Paar von Trägern und ein oberes Paar von Trägern umfasst, wobei das obere Paar von Trägern einen oberen A-Rahmen bildet und das untere Paar von Trägern einen unteren A-Rahmen bildet, wobei die Stützstruktur (3) eine untere Stützstruktur und eine obere Stützstruktur umfasst, wobei die untere Stützstruktur das zumindest untere Paar von Trägern mit der Mittelboje (1) verbindet und die obere Stützstruktur das zumindest obere Paar von Trägern mit der Mittelboje (1) verbindet, wobei das Fundament (F) ferner diagonal angeordnete Streben (5) umfasst, die mit der unteren oder oberen Stützstruktur der Mittelboje (1) oder direkt mit dem Turm (T) zwischen den Trägern (4A, 4B) verbunden sind, wenn von oben gesehen.

2. Schwimmendes Offshore-Windturbinenfundament (F) nach einem der vorhergehenden Ansprüche, wobei ein äußeres Element (2) eine Boje, ein Knoten oder ein(e) kombinierte(r) Boje und Knoten ist.

3. Schwimmendes Offshore-Windturbinenfundament (F) nach einem der vorhergehenden Ansprüche, wobei die Anzahl an Paaren von Trägern (4C) entweder in Nähe eines oberen Teils von jedem der äußeren Elemente (2), in Nähe eines unteren Teils von jedem der äußeren Elemente (2) oder in Nähe des oberen und unteren Teils von jedem der äußeren Elemente (2) verbunden angeordnet ist.

4. Schwimmendes Offshore-Windturbinenfundament (F) nach einem der vorhergehenden Ansprüche, wobei ein distales Ende der Träger (4A, 4B) von jedem Paar von Trägern (4C) Mittellinien mit einem imaginären Schnittpunkt innerhalb eines Umfangs jeder äußeren Boje (2) aufweist.

5. Schwimmendes Offshore-Windturbinenfundament (F) nach einem der vorhergehenden Ansprüche, wobei das distale Ende des Paares von Trägern (4C) Mittellinien mit einem imaginären Schnittpunkt innerhalb eines Kreises (30) mit einem Radius von weniger als 1/3 eines Radius (R) eines Umfangs der äußeren Boje (2) aufweist, wobei der Kreis (30) konzentrisch zu der äußeren Boje (2) angeordnet ist.

6. Schwimmendes Offshore-Windturbinenfundament (F) nach einem der vorhergehenden Ansprüche, wobei die Streben als vorgespannte Strukturelemente angeordnet sind, die flexibel beim Biegen sind, wie ein Draht oder eine Stange oder dergleichen.

7. Schwimmendes Offshore-Windturbinenfundament (F) nach einem der vorhergehenden Ansprüche, wobei das schwimmende Offshore-Windturbinenfundament (F) ferner ein Trimm-/Ballastsystem umfasst, wobei Ballastwasser zwischen jeder äußeren Boje (2) und zwei gegenüberliegenden Trägern (4) oder gegenüberliegender äußerer Boje (2) kommuniziert wird.

8. Schwimmendes Offshore-Windturbinenfundament (F) nach einem der vorhergehenden Ansprüche, wobei ein Winkel α zwischen den Trägern in einem Paar von Trägern angeordnet ist, um in einem Intervall zwischen 5 Grad und 55 Grad zu sein.

9. Schwimmendes Offshore-Windturbinenfundament (F) nach einem der vorhergehenden Ansprüche, wobei ein proximales Ende der Träger (4A, 4B) von jedem Paar von Trägern (4C) mit einem Umfang der Mittelboje (1) verbunden ist.

10. Schwimmendes Offshore-Windturbinenfundament (F) nach Anspruch 9, wobei ein Abstand zwischen dem proximalen Ende der Träger (4A, 4B) von jedem Paar von Trägern (4C) weniger als ein Durchmesser (D) der Mittelboje (1) ist.

11. Schwimmendes Offshore-Windturbinenfundament (F) nach Anspruch 9, wobei ein Abstand zwischen dem proximalen Ende der Träger (4A, 4B) von jedem Paar von Trägern (4C) mehr als ein Durchmesser (D) der Mittelboje (1) ist.

12. Schwimmendes Offshore-Windturbinenfundament (F) nach einem der vorhergehenden Ansprüche, wobei zumindest eine Strebe (5) dazu angeordnet ist, sich von zumindest einem äußeren Element (2) zu einer oberen Stützstruktur (3) einer Mittelboje (1) oder direkt zu dem Turm (T) zu erstrecken.

13. Schwimmendes Offshore-Windturbinenfundament (F) nach einem der vorhergehenden Ansprüche, wobei das schwimmende Offshore-Windturbinenfundament (F) ferner noch ein Verankerungssystem umfasst.

14. Schwimmendes Offshore-Windturbinenfundament (F) nach Anspruch 13, wobei das Verankerungssystem einen einzelnen Anker auf dem Meeresboden umfasst.

15. Schwimmendes Offshore-Windturbinenfundament (F) nach Anspruch 13, wobei das Verankerungssystem eine Anzahl an gespannten vertikalen Ankerelementen umfasst, die zwischen dem schwimmenden Offshore-Windturbinenfundament und dem/den Anker(n), der/die sich auf dem Meeresboden befindet/befinden, verbunden ist.

16. Schwimmendes Offshore-Windturbinenfundament (F) nach Anspruch 13, wobei das Verankerungssystem einen oder mehrere Hubtürme (15), eine Vielzahl von Ankerelementen (16) und Anker (17) umfasst.

17. Schwimmendes Offshore-Windturbinenfundament (F) nach Anspruch 13, wobei das Verankerungssystem ein oder mehrere Anlegeelemente (16) und einen Anker (17) umfasst, wobei der Anker (17) eine Schwenkanordnung umfasst.

18. Schwimmendes Offshore-Windturbinenfundament (F) nach einem der vorhergehenden Ansprüche, wobei ein Stütz- und Transportrahmen (S) um ein zentrales vertikal angeordnetes Rohr (12) mit im Wesentlichen dem gleichen Durchmesser wie die Mittelboje (1) aufgebaut ist, wobei der Stütz- und Transportrahmen (S) dazu angeordnet ist, das schwimmende Offshore-Windturbinenfundament (F) in der Transportphase auf einem Schiff und/oder einer Ausladephase zu einem Schiff oder einem Tauchschiff oder -kahn zu tragen und zu transportieren.

19. Schwimmendes Offshore-Windturbinenfundament (F) nach einem der vorhergehenden Ansprüche, wobei das äußere Element (2) dazu angeordnet ist, während des Schleppens und der Installation teilweise über der Oberfläche des Wassers und nach Abschluss der Installation unter die Oberfläche des Wassers eingetaucht zu sein.

20. Schwimmendes Offshore-Windturbinenfundament (F) nach Anspruch 16, wobei die Hubtürme (15) dazu angeordnet sind, eine bestimmte Höhe über die äußeren Elemente (2) hinauszuragen, wobei die Höhe derart ist, dass ein Teil des Hubturms (15) über eine Oberfläche des Wassers hinausragen wird, wenn das schwimmende Offshore-Windturbinenfundament (F) eingetaucht und in seiner Betriebsposition verankert ist.

21. Verfahren zum Verankern eines schwimmenden Offshore-Windturbinenfundaments (F) nach einem der Ansprüche 1-20, wobei das Verfahren die folgenden Schritte umfasst:
- Transportieren des schwimmenden Offshore-Windturbinenfundaments (F) zu einem Installationsort,
- Verbinden einer Vielzahl von Ankerelementen (16) mit jeweiligen Ankern (17), die unter jedem äußeren Element (2) angeordnet sind,
- Ineingriffbringen der Ankerelemente (15) mit den Hubelementen (nicht gezeigt) jedes Hubturms (15),
- Verwenden der Hubelemente (nicht gezeigt) des Hubturms (15), um die vertikalen Ankerelemente (16) anzuziehen, um das schwimmende Windturbinenfundament (F) in seine Betriebsposition einzutauchen.

## Revendications

1. Fondation flottante d'éolienne en mer (F) comprenant,
- une bouée centrale (1) comprenant une structure de support (3) s'étendant vers l'extérieur à partir de la bouée centrale (1),
- au moins deux éléments externes (2) agencés autour de la bouée centrale (1), et
- une tour (T) agencée s'étendant vers le haut à partir de la bouée centrale (1), ladite tour (T) étant soit une partie intégrante de la bouée centrale (1), soit une unité séparée qui est reliée à la bouée centrale (1) de manière appropriée, ladite tour (T) étant conçue pour fixer un ensemble rotor-nacelle (6) avec des pales,
- une pluralité de poutres (4A, 4B),
ladite pluralité de poutres (4A, 4B) étant disposée pour former un nombre de paires de poutres (4C) qui relient la bouée centrale (1) et lesdits au moins deux éléments externes (2), ladite paire de poutres (4C) se rétrécissant à partir de la bouée centrale (1) vers chacun desdits au moins deux éléments externes (2),
**caractérisée en ce que**
la paire de poutres (4C) comprend au moins une paire inférieure de poutres et une paire supérieure de poutres, ladite paire supérieure de poutres formant un cadre en A supérieur et la paire inférieure de poutres formant un cadre en A inférieur, ladite structure de support (3) comprenant une structure de support inférieure et une structure de support supérieure, ladite structure de support inférieure reliant la au moins paire inférieure de poutres à la bouée centrale (1) et la structure de support supérieure reliant la au moins paire supérieure de poutres à la bouée centrale (1), ladite fondation (F) comprenant en outre des entretoises agencées en diagonale (5) reliées à la structure de support inférieure ou supérieure de la bouée centrale (1), ou directement à la tour (T), entre les poutres (4A, 4B), lorsqu'elles sont vues de dessus.

2. Fondation flottante d'éolienne en mer (F) selon l'une quelconque des revendications précédentes, un élément externe (2) étant une bouée, un nœud ou une bouée et un nœud combinés.

3. Fondation flottante d'éolienne en mer (F) selon l'une quelconque des revendications précédentes, ledit nombre de paires de poutres (4C) étant agencées reliées à proximité d'une partie supérieure de chacun desdits éléments externes (2), à proximité d'une partie inférieure de chacun desdits éléments externes (2), ou à proximité de la partie supérieure et inférieure de chacun desdits éléments externes (2).

4. Fondation flottante d'éolienne en mer (F) selon l'une quelconque des revendications précédentes, une extrémité distale des poutres (4A, 4B) de chaque paire de poutres (4C) possédant des lignes centrales avec un point d'intersection imaginaire à l'intérieur d'une périphérie de chaque bouée externe (2).

5. Fondation flottante d'éolienne en mer (F) selon l'une quelconque des revendications précédentes, ladite extrémité distale de la paire de poutres (4C) possédant des lignes centrales avec un point d'intersection imaginaire à l'intérieur d'un cercle (30) avec un rayon inférieur à 1/3 d'un rayon (R) de la périphérie de la bouée externe (2), ledit cercle (30) étant agencé concentriquement à la bouée externe (2).

6. Fondation flottante d'éolienne en mer (F) selon l'une quelconque des revendications précédentes, lesdites entretoises étant agencées sous forme d'éléments structurels précontraints qui sont souples en flexion, comme un fil ou une tige ou similaire.

7. Fondation flottante d'éolienne en mer (F) selon l'une quelconque des revendications précédentes, ladite fondation flottante d'éolienne en mer (F) comprenant en outre un système de compensation/ballast, l'eau de ballast étant communiquée entre chaque bouée externe (2) et deux poutres opposées (4) ou une bouée externe opposée (2).

8. Fondation flottante d'éolienne en mer (F) selon l'une quelconque des revendications précédentes, un angle α entre les poutres d'une paire de poutres étant agencé pour être compris dans un intervalle entre 5 degrés et 55 degrés.

9. Fondation flottante d'éolienne en mer (F) selon l'une quelconque des revendications précédentes, une extrémité proximale des poutres (4A, 4B) de chaque paire de poutres (4C) étant reliée à une périphérie de la bouée centrale (1).

10. Fondation flottante d'éolienne en mer (F) selon la revendication 9, une distance entre l'extrémité proximale des poutres (4A, 4B) de chaque paire de poutres (4C) étant inférieure à un diamètre (D) de la bouée centrale (1).

11. Fondation flottante d'éolienne en mer (F) selon la revendication 9, une distance entre l'extrémité proximale des poutres (4A, 4B) de chaque paire de poutres (4C) étant supérieure à un diamètre (D) de la bouée centrale (1).

12. Fondation flottante d'éolienne en mer (F) selon l'une quelconque des revendications précédentes, au moins une entretoise (5) étant agencée pour s'étendre à partir d'au moins un élément externe (2) jusqu'à une structure de support supérieure (3) de la bouée centrale (1) ou directement jusqu'à la tour (T).

13. Fondation flottante d'éolienne en mer (F) selon l'une quelconque des revendications précédentes, ladite fondation flottante d'éolienne en mer (F) comprenant en outre un système d'ancrage.

14. Fondation flottante d'éolienne en mer (F) selon la revendication 13, ledit système d'ancrage comprenant un seul ancrage sur le fond marin.

15. Fondation d'éolienne flottante en mer (F) selon la revendication 13, ledit système d'ancrage comprenant un nombre d'éléments d'ancrage verticaux mis sous tensions reliés entre la fondation flottante d'éolienne en mer et un ou plusieurs ancrages situés sur le fond marin.

16. Fondation flottante d'éolienne en mer (F) selon la revendication 13, ledit système d'ancrage comprenant une ou plusieurs chaises de tension (15), une pluralité d'éléments d'ancrage (16) et d'ancrages (17).

17. Fondation flottante d'éolienne en mer (F) selon la revendication 13, ledit système d'ancrage comprenant un ou plusieurs éléments d'amarrage (16) et un ancrage (17), ledit ancrage (17) comprenant un agencement pivotant.

18. Fondation flottante d'éolienne en mer (F) selon l'une quelconque des revendications précédentes, un cadre de support et de transport (S) étant construit autour d'un tuyau central agencé verticalement (12) avec sensiblement le même diamètre que ladite bouée centrale (1), le cadre de support et de transport (S) étant agencé pour supporter et transporter la fondation flottante d'éolienne en mer (F) dans la phase de transport sur un navire, et/ou la phase de chargement sur un navire ou un navire ou une barge submersible.

19. Fondation flottante d'éolienne en mer (F) selon l'une quelconque des revendications précédentes, ledit élément externe (2) étant agencé pour être partiellement au-dessus de la surface de l'eau durant le remorquage et l'installation, et immergé sous la surface de l'eau à la fin de l'installation.

20. Fondation flottante d'éolienne en mer (F) selon la revendication 16, lesdites chaises de tension (15) étant agencées pour faire saillie d'une certaine hauteur au-dessus des éléments externes (2), la hauteur étant de sorte qu'une partie de la chaise de tension (15) fera saillie au-dessus d'une surface de l'eau lorsque la fondation flottante d'éolienne en mer (F) est submergée et ancrée dans sa position de fonctionnement.

21. Procédé permettant l'ancrage d'une fondation flottante d'éolienne en mer (F) selon l'une quelconque des revendications 1 à 20, ledit procédé comprenant les étapes suivantes :
- transport de la fondation flottante d'éolienne en mer (F) vers un site d'installation,
- liaison d'une pluralité d'éléments d'ancrage (16) à des ancrages respectifs (17) agencés en dessous de chaque élément externe (2),
- mise en prise desdits éléments d'ancrage (15) avec les éléments de tension (non représentés) de chaque chaise de tension (15),
- utilisation des éléments de tension (non représentés) de la chaise de tension (15) pour serrer les éléments d'ancrage verticaux (16) afin d'immerger la fondation flottante de l'éolienne (F) dans sa position de fonctionnement.
